# EUROPEAN PATENT SPECIFICATION

(11) **EP 1 550 596 B1**
(45) Date of publication and mention of the grant of the patent: **03.11.2010**
(21) Application number: 04106242.3
(22) Date of filing: 02.12.2004
(51) Int. Cl.: B62B 9/28

(54) **Platform with adjustable anchorage for children's prams.**
Plattform mit einer verstellbaren Verankerung für Kinderwagen.
Plateforme à fixation réglable pour poussettes d'enfant.

(30) Priority: 30.12.2003 ES 200302987 U
(43) Date of publication of application: 06.07.2005
(73) Proprietor: Innovaciones MS, S.L, 46892 Montaverner (ES)
(72) Inventor: Mompo Vidal, Francisco, 46892 Montaverner (ES)
(74) Representative: Isern-Jara, Nuria

(56) References cited:
- WO-A-2004/005107
- DE-A1- 19 922 791
- DE-U1- 20 306 242

## Description

The technical sector involved in this invention is that of the use of platforms adjoined to children's prams or pushchairs.

Platforms for children's prams are a means of pulling a second child with the effort applied on the handle of the pram, which is necessary when there are two brothers or sisters with only slightly differing ages, since whilst one has to be sitting or lying down in the relevant pushchair or cot, the other is still not able to walk without tiring. These are mainly of two kinds: one type is joined to the axle of the rear wheels of the pram or pushchair; the other is joined to the frame of the pram. The one described herein is of the sort that are connected to the frame of the pram. The state of the art known in this matter thus refers to the type stated.

### Statement of the prior state of the art

DE 97662 discloses an auxiliary platform for children's prams or pushchairs which includes a platform, wheels at the rear, and a coupling to the chassis of the pram with an articulation able to lift this platform off the ground when not in use.

US des 160.792 for a combined wagon and trailer toy. This has a trailer which is supported on the frame of the trailer. It is a platform with wheels at the rear. It has only one point of insertion on the wagon.

US 3.374.000 for a combined vehicle has a platform not joined to the chassis of the vehicle that pulls it, fitted with wheels at the rear for pulling.

ES1036050U for an accessory for a children's pushchair for transporting a second child, which consists of a platform which has wheels at the rear and anti-slip surface with a fixing to the chassis of the pushchair in its central part.

EP0918011A1 discloses an auxiliary device for pulling with a children's pram or pushchair which consists of a surface with an anti-slip engraving, with steerable wheels at the rear, and coupled to the pram chassis at two different points, by means of horizontally spaced fixings for this purpose.

EP0911251A1 describes a platform for carrying children which consists of a surface with an anti-slip engraving, wheels at the rear, and an arrangement for adjusting the coupling height by means of a screw, coupled at the front to the chassis of the pram or pushchair.

EP 1104377 B1 for a platform for children's pushchairs and prams, claims a coupling by bushing by means of a mechanical coupling identical to that of a bearing with selectable position by dismantling and fitting in a different position, with a release mechanism which consists of a bar inserted in the sleeve and held by a spring whose extraction determines the possible inclination of the platform on the pram to which it is connected.
It is applied on a platform fitted with wheels at the rear, which is smooth and joined to the pram frame by means of appendices outside this platform, which comes in a square shape.

DE 29719064 U1 discloses a platform to be connected to a children's pram or pushchair, which includes a platform, and can be connected or not in a single body to a device for fixing to the chassis of the pram, so that it has means of distance adjustment consisting in slides and pressure screws which cooperate with securing items to connect this to the rear bar of the pram, being fitted with wheels at the back.

Also, it is known from document no. DE 20306242 U1 an anchorage for children's pram platform provided with means for coupling to a pram for carrying children. The features of said platform are disclosed in the preamble of claim 1.

On the other, it is known from document no. DE 199 22 791 a longitudinal adjustment device arranged on the platform side.

The object of this invention is a platform with an adjustable anchorage for children's pram. It essentially consists of a set of two parts, a first one which Is connected to the pram in a single angular position in which arms are articulated in selective positions. At the end the arms have a position adjustment along this, The moving part of this adjustment has perpendicularly positioned rods. The second part is formed of an anchorage to the trolley. This anchorage clamps a tube in the pram structure.

In order to make the following explanation clearer, two sheets of drawings are adjoined, representing the essence of this invention in two figures.

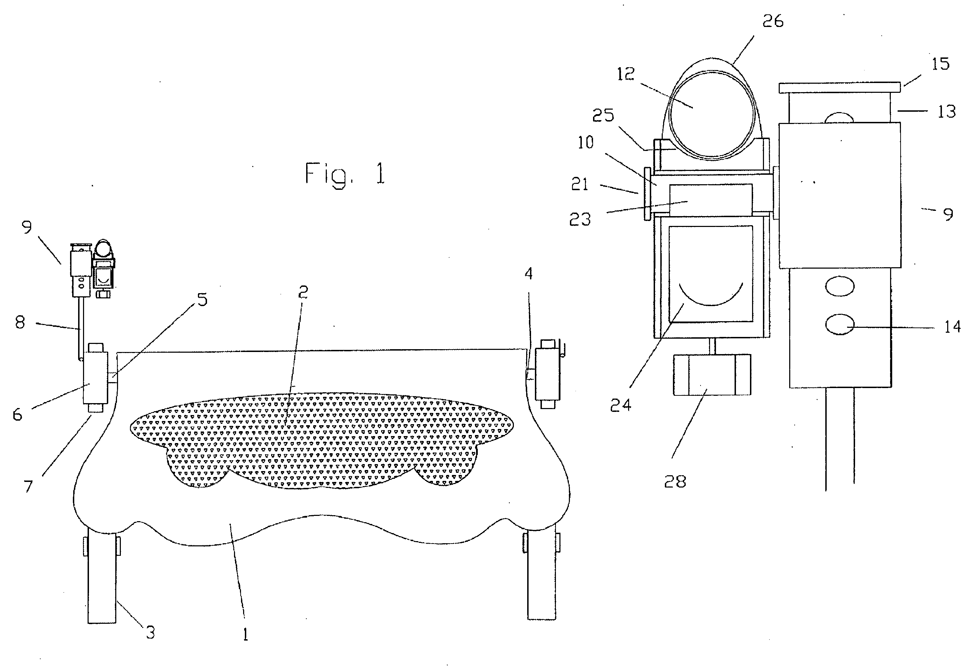

Figure 1 shows a plan view of the set of the platform and its accessories.

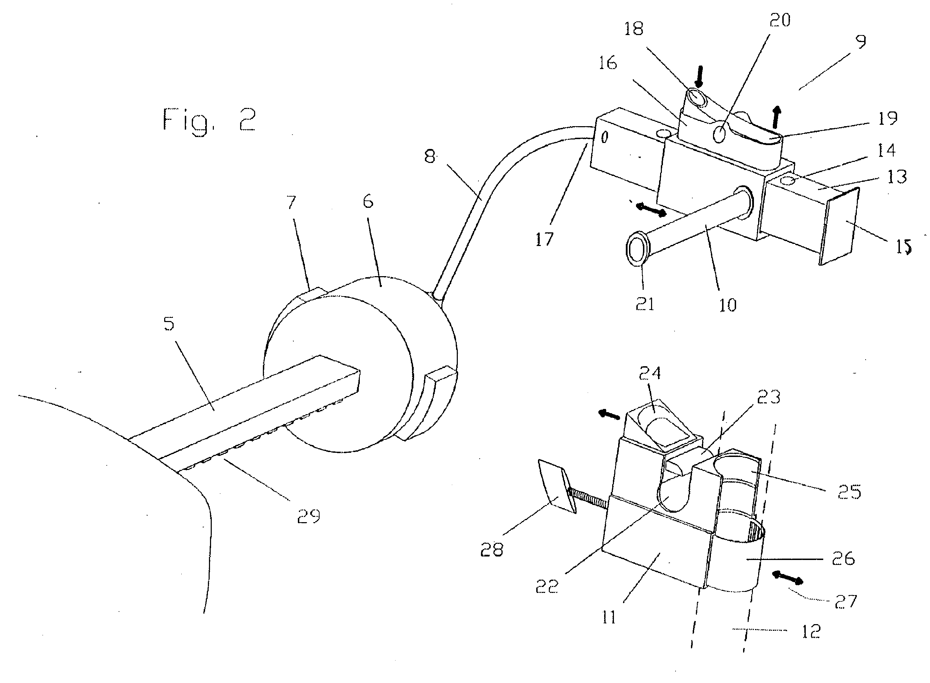

Figure 2 shows a detail of the mechanism for adjustment and anchorage to the pram frame.

In these figures the following numbers represent the items:
1 the platform
2 the anti-slip engraving of the platform with a shape that allows any position of the child's foot to be kept, and thus formed by two broad arches which form each other's lateral ends by circumference shapes, so that the child's foot is held in any position
3 the wheels with suspension
4 rectangular notches or recesses in the platform
5 rectangular rod or square billet coinciding with the recesses 4
6 selector of the angular position of the arms
7 position selector knobs
8 arms for coupling to the pram
9 body with longitudinal regulation of the pram-platform distance
10 rod for inserting the coupling item to the pram
11 part for coupling or fixing to the pram
12 the pram or pushchair; any of its structures preferentially though not exclusively tubular
13 the support body of the adjustment slide
14 interlocking holes for the length regulation 9
15 the stop
16 the interlockable slide
17 the coupling of the arm 8 to the body 9
18 the tilting knob retained by a spring
19 the base of the swivel connected to a pin for insertion in the holes 14
20 the axle of swivel 18-19
21 the end of the rod 10
22 the hollow for insertion of the rod 10
23 the bolt connected to the running knob 24
24 the slide knob connected to the bolt 23 whose movement opens up the hollow for removal of the rod 10; due to its shape the rod goes in by pressure on the bolt
25 the form coinciding with that of the tube or structure of the pram where it is fixed
26 the clamp, preferably of flexible material for clamping on the tube or frame of the pram
27 the movement available of the clamp for said fixing
28 the fixing screw for the clamp 26.
29 the fixing or retaining recesses in selectable positions for partial insertion of the square billets 5 in respect of the notches 4.

### Explanation of one form of embodiment.

This adjustable anchorage for children's pram or pushchair platforms is connected to the platform 1 by means of notches 4 located in the front sides and coincide with rods 5 which are coupled to arms 8 at the ends of which they are fitted with longitudinal adjustment devices 9, a securing piece 11 and both are connected by a rod 10, so that the securing piece is joined to the pram chassis, and the rod 10 is fixed to this, the rod being set on the slide 16, which means that it has an adjustable position along the body 13 which is connected to the arms 8, which are in turn adjustable in angular regulation with no need to be removed, as they have a single position. The part 11 for securing to the pram can be immediately released or fixed with the same immediacy as the arms which sustain the platform. The longitudinal adjustment is formed by holes 14 which can be interlocked with pins set in the bottom of a swivel 18 with central axis and return spring, so that the pressure on this swivel on lifting the opposite end frees the hollow of the pin and allows it to move along this.

The securing between part 11 and the rod 10 is done by means of the mere insertion in the hollow 22 by the support of the rod 10 in the latch 23 of part 11. The latch has a curved shape so that the pressure of the rod leads to its removal, facilitating its entry into the hollow 22 where it is accommodated. Its release is possible by means of a running knob 24 which is retained by a spring, since through the lower part being straight, the pressure of the rod 10 does not allow automatic release. Part 11 is fixed to the pram by means of a flexible type clamp which grips any part of the chassis, of whatever shape or section. It can adapt part 25 to the shape of this tube. The pressure of the screw 28 presses on this part being fixed to the pram. It also has an adjustment in respect of the rods or square billets 5 , which are partially or fully insertable in the notches 4 for which said rods have a lower engraving of recesses that can be trapped by a pressure device located under the platform.

The anti-slip engraving of the platform is designed in such a way as to enable retaining any position in which the child's foot is located, and is thus formed by two broad arches which form each other's end by circumference arch forms, so that the child's foot is held in any position; it also forms a fancy design similar to a futuristic car which is appealing for children.

This is for industrial application in making platforms for children's prams or pushchairs.

## Claims

1. Platform with an adjustable anchorage, being of the sort that has means for coupling to a pram for carrying children and which have wheels, the platform (1) has on both sides of its front two notches (4) which take two rods (5) joined to arms (8) **characterised in that** said arms have at their opposite end two longitudinal adjustment devices (9), and a securing and quick-release piece (11) to and from a part which is able to be secured to the children's pram, so that the platform is adjustable in its distance in respect of the pram, and able to immediately removed or articulated placing this in a folded position against the pram,
wherein said longitudinal adjustment device is connected (17) to each end of the arms (8) and its body (13) has orifices (14) that can constitute the position for interlocking of a slide (16), and usefully a stop (15),
whereby said slide (16) has an interlocking device formed of a knob (18) swivelling in respect of a shaft (20) this knob being retained by an inner spring, the base of the swivel being connected to a pin for insertion in any of the orifices (14) of the body (13) of the slide.

2. Platform with an adjustable anchorage according to claim 1, **characterised in that** the slide (16) has a rod (10) fitted with a stop (21) joined to one of its sides.

3. Platform with an adjustable anchorage according to claim 2, **characterised in that** the quick-release piece (11) has a hollow (22) intended to house the rod (10), which has a bolt or latch (23) which is coupled to a slide knob (24) that is fitted with a spring which tends to close the hollow (22).

4. Platform with an adjustable anchorage according to claim 1, **characterised in that** the latch (23) has a curved external shape so as to facilitate insertion of the rod (10) when pressing on this, only being releasable by manual movement of the slide knob (24) being able to remove the whole of the platform and its arms with longitudinal adjustment in respect of the anchorage.

## Patentansprüche

1. Plattform mit verstellbarer Fixierung der Art, die Befestigungsmittel zur Befestigung an einem Kinderwagen sowie Räder aufweist, wobei die Plattform (1) an beiden Seiten des Vorderteils zwei Nuten (4) zur Aufnahme von zwei mit Armen (8) verbundenen Stangen (5) aufweist, **dadurch gekennzeichnet, dass** diese Arme an ihren gegenüberliegenden Enden zwei Längenverstellvorrichtungen (9) und Schnellverbinder (11) zum raschen Verbinden und Lösen mit bzw. von einem Teil, das am Kinderwagen befestigt werden kann, aufweisen, derart, dass die Entfernung zwischen Plattform und Kinderwagen eingestellt und die Plattform sofort entfernt oder hochgeklappt werden kann, so dass sie in hochgeklappter Position am Kinderwagen anliegt,
wobei diese Längenverstellvorrichtung (17) jeweils mit dem Ende der Arme (8) verbunden ist und ihr Körper (13) Öffnungen aufweist (14), welche die Position zum gegenseitigen Verbinden eines Schiebers (16) und empfehlenswerterweise eines Anschlags (15) darstellen,
derart dass dieser Schieber (16) eine Verbindungsvorrichtung bestehend aus einem gegenüber einer Achse (20) schwenkbaren Knopf (18) aufweist, wobei der Knopf durch eine innere Feder festgehalten wird und die Schwenkbasis mit einem Durchgangsstift verbunden ist, der in eine beliebige Öffnung (14) des Schieberkörpers (13) eingesetzt werden kann.

2. Plattform mit verstellbarer Fixierung nach Anspruch 1, **dadurch gekennzeichnet, dass** der Schieber (16) einen Stab (10) aufweist, der an einem seiner Enden mit einem Anschlag (21) ausgestattet ist.

3. Plattform mit verstellbarer Fixierung nach Anspruch 2, **dadurch gekennzeichnet, dass** der Schnellverbinder (11) eine Aufnahme (22) zum Aufnehmen des Stabs (10) aufweist, der einen Riegel oder eine Klinke (23) hat, welcher mit einem Gleitknopf (24) verbunden ist, der mit einer die Aufnahme (22) zuhaltenden Feder ausgestattet ist.

4. Plattform mit verstellbarer Fixierung nach Anspruch 1, **dadurch gekennzeichnet, dass** der Riegel (23) eine gebogene Außenform hat, um die Einführung des Stabs (10) zu erleichtern, wenn Druck darauf ausgeübt wird, wobei dieser nur durch manuelle Verschiebung des Gleitknopfes (24) gelöst werden kann, wobei die gesamte Plattform mit ihren bezüglich der Fixierung längenverstellbaren Armen abnehmbar ist.

## Revendications

1. Plateforme avec ancrage ajustable, du type comprenant des moyens d'assemblage à une poussette pour enfants ayant des roues, ladite plateforme (1) est munie, des deux côtés de la partie avant, de deux rainures (4) qui reçoivent deux barres (5) unies à des bras (8), **caractérisée en ce que** lesdits bras ont, à l'extrémité opposée, deux dispositifs de réglage longitudinal (9) et une pièce de fixation et de libération rapide (11) vers et depuis une pièce qui peut être fixée à la poussette pour enfants, de sorte que la distance entre la plateforme et la poussette pour enfants est réglable et que la plateforme peut être retirée sur-le-champ ou articulée, en la repliant contre la poussette pour enfants,
de façon que le dit dispositif de réglage longitudinal de la plateforme est raccordé (17) à chaque extrémité des bras (8) et son corps (13) est muni d'orifices (14) qui peuvent servir de position pour l'enclenchement d'un coulisseau (16) et, de préférence, une butée (15), et
de façon que la dit coulisseau (16) est ainsi munie d'un dispositif d'enclenchement constitué d'un bouton (18) qui bascule par rapport à un axe (20), ledit bouton étant retenu par un ressort interne et la base de basculement étant raccordée à une barrette pour l'insertion dans n'importe lequel des orifices (14) du corps (13) du coulisseau.

2. Plateforme avec ancrage ajustable, selon la revendication 1, **caractérisée en ce que** le coulisseau (16) possède une tige (10) dotée d'une butée (21) unie à l'un de ses côtés.

3. Plateforme avec ancrage ajustable, selon la revendication 2, **caractérisée en ce que** la pièce de libération rapide (11) possède un logement (22) destiné à recevoir la tige (10), qui est munie d'un verrou ou loquet (23) assemblé à un bouton coulissant (24) qui est doté d'un ressort tendant à fermer le logement (22).

4. Plateforme avec ancrage ajustable, selon la revendication 1, **caractérisée en ce que** le verrou (23) a une forme extérieure courbe, afin de faciliter l'insertion de la tige (10) lorsqu'une pression est exercée sur celle-ci ; ledit verrou ne pouvant être libéré que par un mouvement manuel du bouton coulissant (24) et pouvant démonter l'ensemble de la plateforme et de ses bras avec un réglage longitudinal par rapport à l'ancrage.
